# EUROPÄISCHE PATENTANMELDUNG

(11) **EP 4 299 249 A2**
(43) Veröffentlichungstag der Anmeldung: **03.01.2024**
(21) Anmeldenummer: 23176003.4
(22) Anmeldetag: 30.05.2023
(51) Int. Cl.: B25B 23/142, G01L 25/00, G01L 5/24

(54) **VERFAHREN UND SYSTEM ZUM PRÜFEN DER KALIBRIERUNG EINES KALIBRIERBAREN ELEKTRONISCHEN DREHMOMENTWERKZEUGS, DREHMOMENTPRÜFVORRICHTUNG UND DREHMOMENTWERKZEUG**

(30) Priorität: 10.06.2022 DE 102022114714
(71) Anmelder: Hoffmann Engineering Services GmbH, 81241 München (DE)
(72) Erfinder: KÜNSTLER, Marko, 80634 München (DE); LIPPACH, Freddy, 81475 München (DE); HILDEBRANDT, Matthias, 82110 Germering (DE)
(74) Vertreter: Seemann & Partner Patentanwälte mbB

(57) **Zusammenfassung**

Die Erfindung betrifft ein Verfahren und ein System (1) zum Prüfen der Kalibrierung eines kalibrierbaren elektronischen Drehmomentwerkzeugs (2) sowie eine Drehmomentprüfvorrichtung (4) und das Drehmomentwerkzeug (2). Zum Prüfen der Kalibrierung des Drehmomentwerkzeugs (2) wird ein Werkzeugkopf (21) des Drehmomentwerkzeugs (2) mit der Drehmomentprüfvorrichtung (4) gekoppelt und eine direkte Datenverbindung (6) etabliert. Das Drehmomentwerkzeug (2) und die Drehmomentprüfvorrichtung (4) bestimmen separat Drehmomentprüfwerte (47, 48), die an die Drehmomentprüfvorrichtung (4) übermittelt werden. Eine Anzeigevorrichtung (45) der Drehmomentprüfvorrichtung (4) zeigt die Drehmomentprüfwerte (47, 48) gleichzeitig an.

## Beschreibung

Die Erfindung betrifft ein Verfahren zum Prüfen der Kalibrierung eines kalibrierbaren elektronischen Drehmomentwerkzeugs.

Zudem betrifft die Erfindung ein System zum Prüfen der Kalibrierung eines kalibrierbaren elektronischen Drehmomentwerkzeugs, eine Drehmomentprüfvorrichtung und ein Drehmomentwerkzeug.

Kalibrierbare elektronische Drehmomentwerkzeuge, wie z.B. Drehmomentschlüssel und Drehmomentschraubendreher, werden vielfach dafür genutzt, um Schrauben, Muttern und ähnliche Verbindungselemente mit einem definierten Drehmoment anzuziehen. Wird das definierte Drehmoment erreicht, wird dies angezeigt und/oder ein, beispielsweise optisches oder akustisches, Signal ausgegeben.

Um sicherzustellen, dass das tatsächliche anliegende Drehmoment dem angezeigten oder ausgegebenen Drehmoment des Drehmomentwerkzeugs entspricht, muss das Drehmomentwerkzeug kalibriert werden. Zur Kalibrierung werden die Drehmomentwerkzeuge vielfach in ein dafür zugelassenes Kalibrierlabor gebracht und dort mittels einer Kalibriervorrichtung neu justiert bzw. kalibriert. Anschließend wird das Drehmomentwerkzeug beispielsweise mit einem Prüfsiegel versehen, um anzuzeigen, dass es für einen festgelegten Zeitraum als kalibriert gilt.

Jedoch kann es vorkommen, dass ein Werkzeug trotz eines gültigen Prüfsiegels nicht mehr korrekt kalibriert ist. Dies ist beispielsweise der Fall, wenn das Werkzeug nach der Kalibrierung einer starken Erschütterung ausgesetzt, zu stark beansprucht oder übermäßig häufig genutzt wurde. Bei der Nutzung eines solchen nicht mehr korrekt kalibrierten Werkzeugs besteht die Gefahr, dass Verbindungselemente mit einem falschen Drehmoment angezogen werden. Dies kann zur Folge haben, dass sich Werkstücke lösen oder beschädigt werden.

Um solche Beschädigungen zu verhindern, sind Drehmomentprüfgeräte bekannt, welche zwischen Kalibrierintervallen verwendet werden, um die Kalibrierung der Drehmomentwerkzeuge zu prüfen.

Die Aufgabe der vorliegenden Erfindung besteht darin, die Nutzung von kalibrierbaren elektronischen Drehmomentwerkzeugen zu erleichtern und gleichzeitig sicherzustellen, dass keine fehlerhaft kalibrierten Drehmomentwerkzeuge genutzt werden.

Diese Aufgabe wird gelöst durch ein Verfahren zum Prüfen der Kalibrierung eines kalibrierbaren elektronischen Drehmomentwerkzeugs, insbesondere eines Drehmomentschraubenschlüssels oder eines Drehmomentschraubendrehers, umfassend die folgenden Schritte:
- Koppeln eines Werkzeugkopfs des Drehmomentwerkzeugs mit einer Werkzeugkopfaufnahme einer Drehmomentprüfvorrichtung,
- Etablieren einer direkten Datenverbindung zwischen dem Drehmomentwerkzeug und der Drehmomentprüfvorrichtung,
- Bestimmen eines prüfvorrichtungsseitigen Drehmomentprüfwerts des Drehmomentwerkzeugs mittels eines Drehmomentsensors der Drehmomentprüfvorrichtung,
- Bestimmen eines werkzeugseitigen Drehmomentprüfwerts des Drehmomentwerkzeugs mittels eines Drehmomentsensors des Drehmomentwerkzeugs,
- Übermitteln des werkzeugseitigen Drehmomentprüfwerts an die Drehmomentprüfvorrichtung mittels der Datenverbindung,
- gleichzeitiges Anzeigen des werkzeugseitigen Drehmomentprüfwerts und des prüfvorrichtungsseitigen Drehmomentprüfwerts auf einer Anzeigevorrichtung der Drehmomentprüfvorrichtung.

Beispielsweise werden die Drehmomentprüfwerte nebeneinander oder untereinander angezeigt. Dies erleichtert die Prüfung der Kalibrierung durch einen Werker, der das Drehmomentwerkzeug freischalten möchte. Insbesondere werden der werkzeugseitige Drehmomentprüfwert mit dem prüfvorrichtungsseitigen Drehmomentprüfwert mittels einer Datenverarbeitungsvorrichtung, die in die Drehmomentprüfvorrichtung integriert ist, verglichen. Ein Zielkorridor des werkzeugseitigen Drehmomentprüfwerts kann insbesondere eingestellt werden. Der Zielkorridor kann insbesondere eingestellt werden von -15% bis +15% des prüfvorrichtungsseitigen Drehmomentprüfwerts. Die obere und untere Grenze des Zielkorridors muss nicht symmetrisch sein. Liegt der werkzeugseitige Drehmomentprüfwert insbesondere außerhalb des Zielkorridors, wird insbesondere ein Warnsignal erzeugt. Das Warnsignal wird insbesondere als Warnnachricht auf der Anzeigevorrichtung angezeigt.

Ein kalibrierbares elektronisches Drehmomentwerkzeug ist insbesondere ein Werkzeug, das einen Werkzeugkopf aufweist, mittels dem mittelbar oder unmittelbar ein Drehmoment auf ein Verbindungselement ausübbar ist, wobei das durch den Werkzeugkopf ausgeübte Drehmoment gemessen und insbesondere angezeigt und/oder ausgegeben wird. Insbesondere gibt das Drehmomentwerkzeug bei Erreichen eines definierten Drehmoments ein Signal aus und/oder verhindert ein weiteres Anziehen. Beispielsweise wird bei Erreichen des eingestellten Drehmoments ein hörbares, fühlbares und/oder sichtbares Signal angezeigt, z.B. ein Klicken oder Knacken.

Der Werkzeugkopf ist insbesondere ein Teil des Drehmomentwerkzeugs, der dazu eingerichtet ist, in einen Antrieb eines Werkstücks einzugreifen oder mit einem Aufsatz gekoppelt zu werden, der in einen Antrieb eines Werkstücks eingreift. Beispielsweise greift der Werkzeugkopf in einen Schraubenkopfantrieb ein oder greift eine Mutter. Gemäß einem weiteren Beispiel wird ein Aufsatz auf dem Werkzeugkopf aufgesteckt, der in den Schraubenkopfantrieb eingreift oder um die Mutter greift.

Die Datenverbindung wird direkt zwischen dem Drehmomentwerkzeug und der Drehmomentprüfvorrichtung hergestellt, ohne Umwege über eine weitere Vorrichtung, z.B. einem Server. Insbesondere wird die direkte Datenverbindung mittels einer Sende- und Empfangsvorrichtung des Drehmomentwerkzeugs und einer Sende- und Empfangsvorrichtung der Drehmomentprüfvorrichtung etabliert.

Die Drehmomentprüfvorrichtung ist insbesondere einstückig ausgebildet. Es handelt sich also insbesondere um eine einzelne, kompakte Vorrichtung, die mit dem Drehmomentwerkzeug koppelbar ist. Dies erleichtert die Durchführung des Verfahrens. Insbesondere ist die Drehmomentprüfvorrichtung mittels der Werkzeugaufnahme direkt oder mittels eines Adapters mit dem Werkzeug koppelbar, um den prüfvorrichtungsseitigen Drehmomentprüfwert zu bestimmen. Insbesondere umfasst die Drehmomentprüfvorrichtung ein Gehäuse, wobei die Sende und Empfangsvorrichtung sowie die Datenverarbeitungsvorrichtung in dem Gehäuse integriert sind. Die Werkzeugkopfaufnahme ist insbesondere am Gehäuse vorgesehen.

Vorzugsweise handelt es sich bei der direkten Datenverbindung um eine drahtlose Datenverbindung, insbesondere um eine Funkverbindung.

Eine drahtlose Datenverbindung ist vorteilhaft, da diese besonders schnell und einfach zu etablieren ist. Beispielsweise ist die direkte Datenverbindung eine Datenverbindung über den Bluetooth-Standard.

Gemäß einer Ausführungsform wird die Nutzung des Drehmomentwerkzeugs durch eine Sperre verhindert, wobei das Verfahren ferner die folgenden Schritte umfasst:
- Vergleichen des werkzeugseitigen Drehmomentprüfwerts mit dem prüfvorrichtungsseitigen Drehmomentprüfwert mittels einer Datenverarbeitungsvorrichtung, die in die Drehmomentprüfvorrichtung integriert ist,
- Erzeugen eines Freischaltsignals, sofern eine Differenz zwischen dem werkzeugseitigen Drehmomentprüfwert und dem prüfvorrichtungsseitigen Drehmomentprüfwert innerhalb eines vorgegeben oder vorgebbaren Toleranzbereichs liegt,

- Übermitteln des Freischaltsignals über die Datenverbindung an das Drehmomentwerkzeug,
- Freischalten des Drehmomentwerkzeugs mittels des Freischaltsignals durch Aufhebung der Sperre.

Die Sperre verhindert die Nutzung des Drehmomentwerkzeugs und wird beispielsweise aktiviert, um eine Nutzung des Drehmomentwerkzeugs nach einem Ereignis zu verhindern, das die Kalibrierung des Drehmomentwerkzeugs beeinträchtigen könnte. Bislang war es nach einem solchen Ereignis notwendig, das Drehmomentwerkzeug in einem Kalibrierlabor vollständig neu zu kalibrieren. Vorteilhaft wird nun durch das erfindungsgemäße Verfahren eine deutlich schnellere und einfachere Möglichkeit bereitgestellt, das Drehmomentwerkzeug freizuschalten. Hierzu wird mit der Drehmomentprüfvorrichtung festgestellt, ob eine Differenz zwischen dem mittels der Drehmomentprüfvorrichtung gemessenen Drehmomentprüfwert und dem mittels des Drehmomentwerkzeugs selbst gemessenen Drehmomentprüfwert innerhalb des Toleranzbereichs liegt. Ist dies der Fall, wird die Sperre aufgehoben. Ist dies nicht der Fall, muss das Drehmomentwerkzeug nachkalibriert werden.

Die Sperre ist insbesondere elektronisch aktivierbar und/oder deaktivierbar. Insbesondere ist die Sperre eine elektronische Sperre. Die Sperrung der Nutzbarkeit des Drehmomentwerkzeugs durch die Sperre erfolgt insbesondere mechanisch und/oder elektronisch und/oder magnetisch. Beispielsweise wird durch die Sperre erreicht, dass das Drehmomentwerkzeug blockiert, so dass ein Anziehen eines Verbindungselements bei aktivierter Sperre unmöglich ist. Insbesondere wird zusätzlich oder alternativ angezeigt, dass das Drehmomentwerkzeug blockiert ist. Gemäß einem anderen Beispiel wird durch die Sperre erreicht, dass das Drehmomentwerkzeug unabhängig vom anliegenden Drehmoment durchdreht.

Insbesondere kann an der Drehmomentprüfvorrichtung eingestellt werden, ob die Drehmomentprüfwerte miteinander verglichen und/oder das Freischaltsignal erzeugt werden soll, oder ob lediglich die Drehmomentprüfwerte gleichzeitig, also simultan, angezeigt werden sollen. Der Zielkorridor entspricht insbesondere dem Toleranzbereich.

Der Toleranzbereich beträgt insbesondere +/- 1 % bis +/- 15% oder, bei Drehmomentwerkzeugen die eine hohe Genauigkeit benötigen, bis zu +/- 1% des prüfvorrichtungsseitigen Drehmomentprüfwerts. Der prüfvorrichtungsseitige Drehmomentprüfwert gibt insbesondere das tatsächlich am Werkzeugkopf anliegende Drehmoment an, während der werkzeugseitige Drehmomentprüfwert das Drehmoment angibt, das vom Werkzeug gemessen wird.

Sofern die Differenz zwischen dem prüfvorrichtungsseitigen Drehmomentprüfwert und dem werkzeugseitigen Drehmomentprüfwert außerhalb des Toleranzbereichs liegt, wird kein Freischaltsignal erzeugt und das Drehmomentwerkzeug bleibt gesperrt. Erst nach einer Nachkalibrierung des Drehmomentwerkzeugs kann dieses wieder benutzt werden. Die Drehmomentprüfvorrichtung ist gemäß einer Ausführungsform nicht dazu eingerichtet, das Drehmomentwerkzeug zu kalibrieren oder nachzukalibrieren. Gemäß einer anderen Ausführungsform ist die Drehmomentprüfvorrichtung dazu eingerichtet, das Drehmomentwerkzeug automatisch zu justieren.

Vorzugsweise wird die Sperre des Drehmomentwerkzeugs durch das Freischaltsignal lediglich für einen temporären Zeitraum oder eine vorgebbare oder vorgegebene Anzahl an Nutzungszyklen aufgehoben, wobei die Dauer des temporären Zeitraums insbesondere vorgeben wird oder vorgebbar ist.

Beispielsweise wird die Sperre für die Schicht eines Werkers, einen Arbeitstag, oder eine Arbeitswoche aufgehoben oder die Sperre wird beispielsweise für 100 oder 1.000 Nutzungszyklen aufgehoben. Vor der Benutzung des Drehmomentwerkzeugs wird auf diese Weise sichergestellt, dass es korrekt kalibriert ist. Somit wird vermieden, dass ein fehlerhaft kalibriertes Werkzeug benutzt wird.

Die Sperre des Drehmomentwerkzeugs wird insbesondere aktiviert, sofern ein Erschütterungssensor des Drehmomentwerkzeugs eine Erschütterung registriert, die einen vorgebbaren oder vorgegebenen Erschütterungsgrenzwert überschreitet.

Nachdem das Drehmomentwerkzeug herunterfällt oder auf andere Weise einer Erschütterung ausgesetzt wird, ist es unter Umständen nicht mehr korrekt kalibriert. In diesem Fall wird die Sperre aktiviert, um zu verhindern, dass mit einem nicht korrekt kalibrierten Werkzeug gearbeitet wird. Durch Überprüfen der Kalibrierung mittels der Drehmomentprüfvorrichtung kann die Sperre aufgehoben werden, wenn festgestellt wird, dass die Kalibrierung trotz der Erschütterung immer noch im Toleranzbereich liegt. Eine Nachkalibrierung in einem Kalibrierlabor ist in diesem Fall nicht mehr nötig.

Insbesondere umfasst das Drehmomentwerkzeug einen Umgebungsparametersensor, insbesondere einen Temperatursensor und/oder einen Feuchtigkeitssensor. Die Sperre des Drehmomentwerkzeugs wird insbesondere aktiviert, sofern der Umgebungsparametersensor einen Messwert registriert, der einen vorgebbaren oder vorgegebenen Grenzwert für den Umgebungsparametersensor überschreitet.

Vorzugsweise wird die Sperre des Drehmomentwerkzeugs aktiviert, sofern der Drehmomentsensor des Drehmomentwerkzeugs einen Drehmomentwert registriert, der einen vorgebbaren oder vorgegebenen Drehmomentgrenzwert überschreitet.

Auch nach einer Überlastung des Werkzeugs, beispielsweise durch ein zu festes Anziehen, ist das Drehmomentwerkzeug unter Umständen nicht mehr korrekt kalibriert. In diesem Fall wird vorzugsweise ebenfalls die Sperre aktiviert, die nach einer bestandenen Prüfung mittels der Drehmomentprüfvorrichtung wieder aufgehoben werden kann.

Insbesondere werden die gemessenen Drehmomentprüfwerte und die relevanten Messparameter in der Drehmomentprüfvorrichtung abgespeichert. Insbesondere werden Daten, insbesondere die Drehmomentprüfwerte und/oder eine Auswertung der Drehmomentprüfwerte, an ein anderes Gerät oder ein zentrales Qualitätsmanagementsystem übermittelt. Dies geschieht beispielsweise zur digitalen Dokumentation. Bei der Auswertung handelt es sich beispielsweise um eine Gut-Schlecht Bewertung, also eine OK/NOK-Auswertung.

Die Aufgabe wird zudem gelöst durch ein System zum Prüfen der Kalibrierung eines kalibrierbaren elektronischen Drehmomentwerkzeugs, insbesondere eines Drehmomentschraubenschlüssels oder eines Drehmomentschraubendrehers, wobei das System das Drehmomentwerkzeug und eine Drehmomentprüfvorrichtung umfasst, wobei das Drehmomentwerkzeug einen Werkzeugkörper, einen Werkzeugkopf, eine Sende- und Empfangsvorrichtung und einen Drehmomentsensor umfasst, wobei die Drehmomentprüfvorrichtung eine Werkzeugkopfaufnahme, eine Sende- und Empfangsvorrichtung, einen Drehmomentsensor und eine Anzeigevorrichtung umfasst, wobei die Werkzeugkopfaufnahme zur Aufnahme des Werkzeugkopfs ausgebildet ist, wobei die Sende- und Empfangsvorrichtung des Drehmomentwerkzeugs und die Sende- und Empfangsvorrichtung der Drehmomentprüfvorrichtung dazu eingerichtet sind, eine direkte Datenverbindung zwischen dem Drehmomentwerkzeug und der Drehmomentprüfvorrichtung zu etablieren, wobei die Drehmomentprüfvorrichtung dazu eingerichtet ist, mittels des Drehmomentsensors der Drehmomentprüfvorrichtung einen prüfvorrichtungsseitigen Drehmomentprüfwert des Drehmomentwerkzeugs zu bestimmen, wobei das Drehmomentwerkzeug dazu eingerichtet ist, mittels des Drehmomentsensors des Drehmomentwerkzeugs einen werkzeugseitigen Drehmomentprüfwert des Drehmomentwerkzeugs zu bestimmen und den werkzeugseitigen Drehmomentprüfwert über die Datenverbindung an die Drehmomentprüfvorrichtung zu übermitteln, wobei die Anzeigevorrichtung dazu eingerichtet ist, den werkzeugseitigen Drehmomentprüfwert und den prüfvorrichtungsseitigen Drehmomentprüfwert gleichzeitig anzuzeigen.

Das System verkörpert die gleichen Vorteile, Merkmale und Eigenschaften wie das zuvor beschriebene Verfahren zum Freischalten eines kalibrierbaren elektronischen Drehmomentwerkzeugs. Das System ist insbesondere dazu ausgebildet, das Verfahren nach einem der zuvor dargestellten Ausführungsform auszuführen.

Die Drehmomentprüfvorrichtung umfasst vorzugsweise eine integrierte Datenverarbeitungsvorrichtung. Gemäß einer Ausführungsform wird die Nutzung des Drehmomentwerkzeugs durch eine Sperre verhindert. Die Datenverarbeitungsvorrichtung ist bevorzugt dazu eingerichtet, den werkzeugseitigen Drehmomentprüfwert und den prüfvorrichtungsseitigen Drehmomentprüfwert zu empfangen, miteinander zu vergleichen und ein Freischaltsignal zu erzeugen, sofern eine Differenz zwischen dem werkzeugseitigen Drehmomentprüfwert und dem prüfvorrichtungsseitigen Drehmomentprüfwert innerhalb eines vorgegeben oder vorgebbaren Toleranzbereichs liegt, wobei die Datenverarbeitungsvorrichtung ferner dazu eingerichtet ist, das Freischaltsignal über die Datenverbindung an das Drehmomentwerkzeug zu übermitteln, wobei das Drehmomentwerkzeug dazu eingerichtet ist, sich mittels des Freischaltsignals durch Aufhebung der Sperre freizuschalten.

Insbesondere ist die Datenverarbeitungsvorrichtung dazu eingerichtet, Nutzeingaben zu empfangen, um einzustellen, ob die Drehmomentprüfwerte ausgewertet werden sollen oder nicht.

Das Drehmomentwerkzeug umfasst vorzugsweise einen Erschütterungssensor, wobei das Drehmomentwerkzeug dazu eingerichtet ist, die Sperre des Drehmomentwerkzeugs zu aktivieren, sofern der Erschütterungssensor eine Erschütterung registriert, die einen vorgebbaren oder vorgegebenen Erschütterungsgrenzwert überschreitet.

Das Drehmomentwerkzeug ist vorzugsweise dazu eingerichtet, die Sperre des Drehmomentwerkzeugs zu aktivieren, sofern der Drehmomentsensor des Drehmomentwerkzeugs einen Drehmomentwert registriert, der einen vorgebbaren oder vorgegebenen Drehmomentgrenzwert überschreitet.

Die Aufgabe wird zudem gelöst durch eine Drehmomentprüfvorrichtung, umfassend eine Werkzeugkopfaufnahme, eine Sende- und Empfangsvorrichtung, einen Drehmomentsensor und eine Anzeigevorrichtung, wobei die Drehmomentprüfvorrichtung dazu eingerichtet und/oder ausgebildet ist, die folgenden Verfahrensschritte auszuführen:
- Etablieren einer direkten Datenverbindung zwischen der Drehmomentprüfvorrichtung und einem Drehmomentwerkzeug mittels der Sende- und Empfangsvorrichtung der Drehmomentprüfvorrichtung,
- Bestimmen eines prüfvorrichtungsseitigen Drehmomentprüfwerts des Drehmomentwerkzeugs mittels des Drehmomentsensors der Drehmomentprüfvorrichtung, nachdem ein Werkzeugkopf des Drehmomentwerkzeugs mit der Werkzeugkopfaufnahme der Drehmomentprüfvorrichtung gekoppelt wurde,
- Empfangen eines werkzeugseitigen Drehmomentprüfwerts mittels der Datenverbindung,
wobei die Drehmomentprüfvorrichtung ferner dazu eingerichtet ist, auf der Anzeigevorrichtung den werkzeugseitigen Drehmomentprüfwert und den prüfvorrichtungsseitigen Drehmomentprüfwert gleichzeitig anzuzeigen.

Durch die auf diese Weise eingerichtete Anzeigevorrichtung lassen sich die Drehmomentprüfwerte auf einen Blick vergleichen. Gemäß einer weiteren Ausführungsform werden die Drehmomentprüfwerte angezeigt und ausgewertet. Beispielsweise werden die Drehmomentprüfwerte miteinander verglichen, um zu ermitteln, ob der werkzeugseitige Drehmomentprüfwert innerhalb des Zielkorridors und/oder des Toleranzbereichs liegt.

Gemäß einer Ausführungsform umfasst die Drehmomentprüfvorrichtung eine integrierte Datenverarbeitungsvorrichtung. Vorzugsweise ist die Drehmomentprüfvorrichtung dazu eingerichtet und/oder ausgebildet die folgenden Verfahrensschritte auszuführen:
- Vergleichen des werkzeugseitigen Drehmomentprüfwerts mit dem prüfvorrichtungsseitigen Drehmomentprüfwert mittels der Datenverarbeitungsvorrichtung,
- Erzeugen eines Freischaltsignals, sofern eine Differenz zwischen dem werkzeugseitige Drehmomentprüfwert und dem prüfvorrichtungsseitigen Drehmomentprüfwert innerhalb eines vorgegeben oder vorgebbaren Toleranzbereichs liegt,
- Übermitteln des Freischaltsignals über die Datenverbindung an das Drehmomentwerkzeug.

Mit anderen Worten ist die Drehmomentprüfvorrichtung dazu ausgebildet, eine Datenverbindung mit einem Drehmomentwerkzeug zu etablieren, nach Kopplung mit dem Werkzeugkopf den prüfvorrichtungsseitigen Drehmomentprüfwert zu bestimmen und den werkzeugseitigen Drehmomentprüfwert vom Drehmomentwerkzeug zu empfangen.

Zusätzlich zu dem Anzeigen der Drehmomentprüfwerte auf der Anzeigevorrichtung werden insbesondere die Drehmomentprüfwerte miteinander verglichen und, sofern die Differenz im Toleranzbereich liegt, das Freischaltsignal erzeugt und an das Drehmomentwerkzeug übermittelt. Auf diese Weise kann schnell und einfach die Kalibrierung des Drehmomentwerkzeugs überprüft und eine Sperre des Drehmomentwerkzeugs aufgehoben werden.

Insbesondere ist die Drehmomentprüfvorrichtung dazu eingerichtet, mit einem kalibrierbaren elektronischen Drehmomentwerkzeug zusammenzuwirken, um das Verfahren nach einem der zuvor beschriebenen Ausführungsform auszuführen.

Schließlich wird die Aufgabe gelöst durch ein kalibrierbares elektronisches Drehmomentwerkzeug, umfassend einen Werkzeugkörper, einen Werkzeugkopf, eine Sende- und Empfangsvorrichtung und einen Drehmomentsensor, wobei das Drehmomentwerkzeug dazu eingerichtet und/oder ausgebildet ist, die folgenden Verfahrensschritte auszuführen:
- Etablieren einer direkten Datenverbindung zwischen dem Drehmomentwerkzeug und einer Drehmomentprüfvorrichtung mittels der Sende- und Empfangsvorrichtung des Drehmomentwerkzeugs,
- Bestimmen eines werkzeugseitigen Drehmomentprüfwerts des Drehmomentwerkzeugs mittels des Drehmomentsensors des Drehmomentwerkzeugs,
- Übermitteln des werkzeugseitigen Drehmomentprüfwerts an die Drehmomentprüfvorrichtung mittels der Datenverbindung,
- Empfang eines Freischaltsignals von der Drehmomentprüfvorrichtung über die Datenverbindung,
- Freischalten des Drehmomentwerkzeugs mittels des Freischaltsignals durch Aufhebung einer Sperre.

Die Drehmomentprüfvorrichtung und das kalibrierbare elektronische Drehmomentwerkzeug verkörpern die gleichen Vorteile, Merkmale und Eigenschaften, wie das zuvor beschriebene Verfahren zum Freischalten eines kalibrierbaren elektronischen Drehmomentwerkzeugs und das zuvor beschriebene System zur Freischaltung eines kalibrierbaren elektronischen Drehmomentwerkzeugs.

Das kalibrierbare elektronische Drehmomentwerkzeug ist insbesondere dazu ausgebildet, mit einer Drehmomentprüfvorrichtung zusammenzuwirken, um das Verfahren nach einer zuvor beschriebenen Ausführungsform auszuführen. Der Werkzeugkopf des kalibrierbaren elektronischen Drehmomentwerkzeugs ist insbesondere dazu ausgebildet, mit einer Werkzeugaufnahme der Drehmomentprüfvorrichtung gekoppelt zu werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1:: eine schematisch vereinfachte Darstellung eines Systems zum Prüfen der Kalibrierung eines kalibrierbaren elektronischen Drehmomentwerkzeugs, und
- Fig. 2:: eine schematisch vereinfachte Darstellung einer Anzeigevorrichtung einer Drehmomentprüfvorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

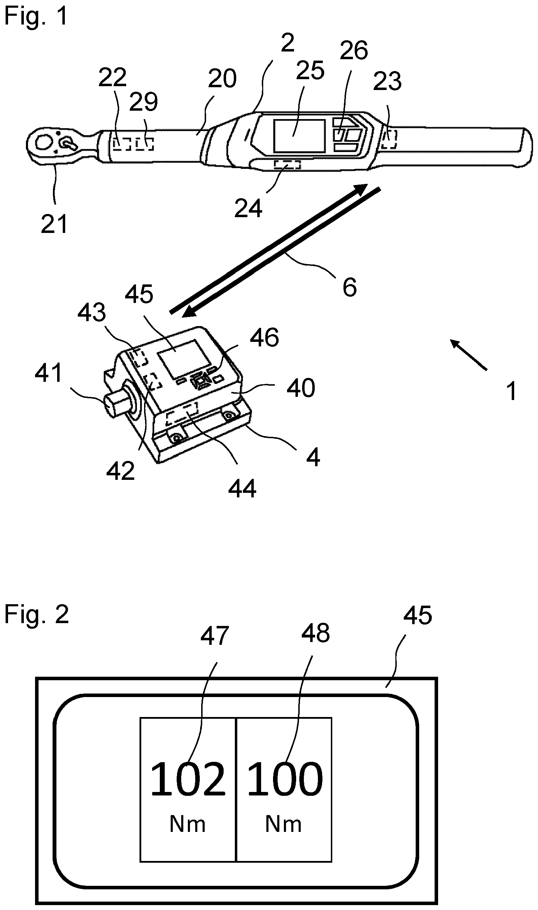

Fig. 1 zeigt schematisch vereinfacht ein System 1 zum Prüfen der Kalibrierungeines kalibrierbaren elektronischen Drehmomentwerkzeugs 2. Das Drehmomentwerkzeug 2 ist in dem dargestellten Ausführungsbeispiel ein elektronischer Drehmomentschlüssel. Der Drehmomentschlüssel umfasst einen Werkzeugkörper 20 und einen Werkzeugkopf 21, der dazu vorgesehen ist, z.B. in einem Schraubenkopfantrieb zu greifen oder um eine Mutter zu greifen oder einen Aufsatz aufzunehmen, der wiederum den Schraubenkopfantrieb oder die Mutter greift. Das Drehmomentwerkzeug 2 umfasst zudem eine Anzeigevorrichtung 25 und Bedienelemente 26, mittels denen beispielsweise ein derzeit auf dem Werkzeugkopf 21 wirkendes Drehmoment anzeigbar ist und/oder ein gewünschtes Drehmoment einstellbar ist. Sollen beispielsweise Muttern mit einem bestimmten definierten Drehmoment angezogen werden, kann dies mittels der Bedienelemente 26 eingestellt werden. Wird das definierte Drehmoment erreicht, wird dies auf der Anzeige 25 angezeigt und/oder auf andere Weise signalisiert, beispielsweise durch ein Geräusch.

Im Innern des Werkzeugkörpers 20 sind ein Drehmomentsensor 22, eine Sende- und Empfangsvorrichtung 23, eine Datenverarbeitungsvorrichtung 24 und ein Erschütterungssensor 29 vorgesehen, die in Fig. 1 jeweils mit gestrichelten Linien dargestellt sind, um zu verdeutlichen, dass sie von außen für gewöhnlich nicht sichtbar sind. Die Position dieser Komponenten innerhalb des Drehmomentwerkzeugs 2 muss nicht der in Fig. 1 gezeigten Position entsprechen. Mittels des Drehmomentsensors 22 wird das an dem Werkzeugkopf 21 anliegende bzw. durch den Werkzeugkopf 21 ausgeübte Drehmoment gemessen. Die Datenverarbeitungsvorrichtung 24 steuert die Sensoren 22, 29, die Sende- und Empfangsvorrichtung 23 und die Anzeigevorrichtung 25 und empfängt und sendet Daten und Signale an die Komponenten des Systems 1. Mittels des Erschütterungssensors 29 lässt sich feststellen, ob das Drehmomentwerkzeug 2 einer Erschütterung ausgesetzt wurde, die eine Kalibrierung des Drehmomentwerkzeugs 2 beeinträchtigen könnte. Auch durch andere Ereignisse, beispielsweise ein zu großes auf dem Werkzeugkopf 21 wirkendes Drehmoment oder eine übermäßige Nutzung des Drehmomentwerkzeugs 2, kann eine Kalibrierung des Drehmomentwerkzeugs 2 beeinträchtigt werden.

Nachdem ein Drehmomentwerkzeug 2 einem solchen Ereignis ausgesetzt war, muss es für gewöhnlich in einem Kalibrierlabor nachkalibriert werden. Anderenfalls besteht die Gefahr, das mit einem fehlerhaft kalibrierten Drehmomentwerkzeug 2 gearbeitet wird. Daher sind Drehmomentwerkzeuge 2 vielfach mit einer Sperre ausgestattet, die eine Nutzung des Drehmomentwerkzeugs 2 verhindert, wenn die Gefahr besteht, dass es nicht mehr korrekt kalibriert ist. Erst durch die Nachkalibrierung lässt sich diese Sperre aufheben. Jedoch ist eine solche Kalibrierung zeit- und arbeitsaufwendig.

Um diesen Aufwand zu verringern, sieht das System 1 neben dem Drehmomentwerkzeug 2 eine Drehmomentprüfvorrichtung 4 vor. Die Drehmomentprüfvorrichtung 4 umfasst ein Gehäuse 40, an dem eine Werkzeugkopfaufnahme 41, eine Anzeigevorrichtung 45 und Bedienelemente 46 vorgesehen sind. Zudem sind im Inneren des Gehäuses 40 ein Drehmomentsensor 42, eine Sende- und Empfangsvorrichtung 43 und eine Datenverarbeitungsvorrichtung 44 angeordnet, die mit gestrichelten Linien dargestellt sind.

Um zu prüfen, ob das Drehmomentwerkzeug 2 korrekt kalibriert ist, wird der Werkzeugkopf 21 mit der Werkzeugkopfaufnahme 41 gekoppelt. Zudem wird eine direkte Datenverbindung 6 zwischen dem Drehmomentwerkzeug 2 und einer Drehmomentprüfvorrichtung 4 aufgebaut, und zwar mittels der Sende- und Empfangsvorrichtungen 23, 43. Bei dieser Datenverbindung 6 handelt es sich beispielsweise um eine drahtlose Datenverbindung 6 basierend auf dem Bluetooth-Standard.

Mittels des Drehmomentsensors 22 des Drehmomentwerkzeugs 2 wird nun ein werkzeugseitiger Drehmomentprüfwert 47 gemessen. Dieser werkzeugseitige Drehmomentprüfwert 47 entspricht dem Drehmomentwert, der von dem Drehmomentwerkzeug 2 ausgegeben oder angezeigt wird, wenn ein vorbestimmtes Drehmoment an dem Werkzeugkopf 21 anliegt. Zudem wird mittels des Drehmomentsensors 42 der Drehmomentprüfvorrichtung 4 ein prüfvorrichtungsseitiger Drehmomentprüfwert ermittelt, der dem tatsächlich am Werkzeugkopf 21 anliegenden, vorbestimmten Drehmoment entspricht. Es können auch mehrere Paare von werkzeugseitigen Drehmomentprüfwerten 47 und prüfvorrichtungsseitigen Drehmomentprüfwerten 48 für unterschiedliche vorgegebene Drehmomente ermittelt werden. Über die Datenverbindung 6 wird der werkzeugseitige Drehmomentprüfwert 47 an die Drehmomentprüfvorrichtung 4 übermittelt. Die Datenverarbeitungsvorrichtung 44 der Drehmomentprüfvorrichtung 4 vergleicht nun die Drehmomentprüfwerte 47, 48. Liegt die Differenz zwischen den Drehmomentprüfwerten 47, 48 außerhalb eines Toleranzbereichs, der beispielsweise bei 1% bis 5% des prüfvorrichtungsseitigen Drehmomentprüfwert 48 liegt, ist das Drehmomentwerkzeug 2 nicht länger korrekt kalibriert. In diesem Fall zeigt die Anzeigevorrichtung 45 der Drehmomentprüfvorrichtung 4 insbesondere an, dass das Drehmomentwerkzeug 2 nachkalibriert werden muss. Liegt die Differenz zwischen den Drehmomentprüfwerten 47, 48 hingegen innerhalb des Toleranzbereichs, wird ein Freischaltsignal erzeugt und mittels der Datenverbindung an das Drehmomentwerkzeug 2 übermittelt. Nach Empfang des Freischaltsignals hebt das Drehmomentwerkzeug 2 eine Sperre auf, mit der verhindert wurde, dass das Drehmomentwerkzeug 2 nach Registrierung eines der vorgenannten Ereignisse benutzt wird.

Fig. 2 zeigt schematisch vereinfacht die Anzeigevorrichtung 45 der Drehmomentprüfvorrichtung 4, nachdem sowohl der prüfvorrichtungsseitige Drehmomentprüfwert 48 als auch der werkzeugseitige Drehmomentprüfwert 47 in der Drehmomentprüfvorrichtung 4 vorliegen. Die Prüfwerte 47, 48 werden auf der Anzeigevorrichtung 45 nebeneinander angezeigt. Auf diese Weise kann auf einem Blick ermittelt werden, ob das Drehmomentwerkzeug 2 noch korrekt kalibriert ist. Auf eine weitere separate Vorrichtung zur Anzeige und Auswertung der Drehmomentprüfwerte, beispielsweise einen zusätzlichen Computer oder Server, kann somit verzichtet werden. Das System 1 umfasst in dieser Ausführungsform lediglich das Drehmomentwerkzeug 2 und die Drehmomentprüfvorrichtung 4. In dem dargestellten Beispiel liegt der werkzeugseitige Drehmomentprüfwert 47 bei 102 Nm, während der prüfvorrichtungsseitige Drehmomentprüfwert 48 bei 100 Nm liegt. Somit ist der werkzeugseitige Drehmomentprüfwert 47 2% größer als der prüfvorrichtungsseitige Drehmomentprüfwert 48, was innerhalb der beispielhaft genannten Toleranz liegt.

Mittels der Drehmomentprüfvorrichtung 2 kann die Kalibrierung des Drehmomentwerkzeugs 2 selbstverständlich auch dann überprüft werden, wenn das Drehmomentwerkzeug 2 nicht gesperrt ist. Durch den kompakten Aufbau der Drehmomentprüfvorrichtung 2 und die übersichtliche Darstellung auf der Anzeigevorrichtung 45 lässt sich die Kalibrierung jederzeit in kürzester Zeit kontrollieren.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: System
- 2: Drehmomentwerkzeug
- 4: Drehmomentprüfvorrichtung
- 6: Datenverbindung
- 20: Werkzeugkörper
- 21: Werkzeugkopf
- 22: Drehmomentsensor
- 23: Sende- und Empfangsvorrichtung
- 24: Datenverarbeitungsvorrichtung
- 25: Anzeigevorrichtung
- 26: Bedienelemente
- 29: Erschütterungssensor
- 40: Gehäuse
- 41: Werkzeugkopfaufnahme
- 42: Drehmomentsensor
- 43: Sende- und Empfangsvorrichtung
- 44: Datenverarbeitungsvorrichtung
- 45: Anzeigevorrichtung
- 46: Bedienelemente
- 47: werkzeugseitiger Drehmomentprüfwert
- 48: prüfvorrichtungsseitiger Drehmomentprüfwert

## Patentansprüche

1. Verfahren zum Prüfen der Kalibrierung eines kalibrierbaren elektronischen Drehmomentwerkzeugs (2), insbesondere eines Drehmomentschraubenschlüssels oder eines Drehmomentschraubendrehers, umfassend die folgenden Schritte:
- Koppeln eines Werkzeugkopfs (21) des Drehmomentwerkzeugs (2) mit einer Werkzeugkopfaufnahme (41) einer Drehmomentprüfvorrichtung (4),
- Etablieren einer direkten Datenverbindung (6) zwischen dem Drehmomentwerkzeug (2) und der Drehmomentprüfvorrichtung (4),
- Bestimmen eines prüfvorrichtungsseitigen Drehmomentprüfwerts (48) des Drehmomentwerkzeugs (2) mittels eines Drehmomentsensors (42) der Drehmomentprüfvorrichtung (4),
- Bestimmen eines werkzeugseitigen Drehmomentprüfwerts (47) des Drehmomentwerkzeugs (2) mittels eines Drehmomentsensors (22) des Drehmomentwerkzeugs (2),
- Übermitteln des werkzeugseitigen Drehmomentprüfwerts (47) an die Drehmomentprüfvorrichtung (4) mittels der Datenverbindung (6),
- gleichzeitiges Anzeigen des werkzeugseitigen Drehmomentprüfwerts (47) und des prüfvorrichtungsseitigen Drehmomentprüfwerts (48) auf einer Anzeigevorrichtung (45) der Drehmomentprüfvorrichtung (4).

2. Verfahren nach Anspruch 1, **dadurch gekennzeichnet, dass** es sich bei der direkten Datenverbindung (6) um eine drahtlose Datenverbindung handelt, insbesondere um eine Funkverbindung.

3. Verfahren nach Anspruch 1 oder 2, wobei die Nutzung des Drehmomentwerkzeugs (2) durch eine Sperre verhindert wird, wobei das Verfahren ferner die folgenden Schritte umfasst:
- Vergleichen des werkzeugseitigen Drehmomentprüfwerts (47) mit dem prüfvorrichtungsseitigen Drehmomentprüfwert (48) mittels einer Datenverarbeitungsvorrichtung (44), die in die Drehmomentprüfvorrichtung (4) integriert ist,
- Erzeugen eines Freischaltsignals, sofern eine Differenz zwischen dem werkzeugseitigen Drehmomentprüfwert (47) und dem prüfvorrichtungsseitigen Drehmomentprüfwert (48) innerhalb eines vorgegeben oder vorgebbaren Toleranzbereichs liegt,
- Übermitteln des Freischaltsignals über die Datenverbindung (6) an das Drehmomentwerkzeug (2),
- Freischalten des Drehmomentwerkzeugs (2) mittels des Freischaltsignals durch Aufhebung der Sperre.

4. Verfahren nach Anspruch 3, **dadurch gekennzeichnet, dass** die Sperre des Drehmomentwerkzeugs (2) durch das Freischaltsignal lediglich für einen temporären Zeitraum oder eine vorgebbare oder vorgegebene Anzahl an Nutzungszyklen aufgehoben wird, wobei die Dauer des temporären Zeitraums insbesondere vorgeben wird oder vorgebbar ist.

5. Verfahren nach Anspruch 3 oder 4, **dadurch gekennzeichnet, dass** die Sperre des Drehmomentwerkzeugs (2) aktiviert wird, sofern ein Erschütterungssensor (29) des Drehmomentwerkzeugs (2) eine Erschütterung registriert, die einen vorgebbaren oder vorgegebenen Erschütterungsgrenzwert überschreitet.

6. Verfahren nach einem der Ansprüche 3 bis 5, **dadurch gekennzeichnet, dass** die Sperre des Drehmomentwerkzeugs (2) aktiviert wird, sofern der Drehmomentsensor (22) des Drehmomentwerkzeugs (2) einen Drehmomentwert registriert, der einen vorgebbaren oder vorgegebenen Drehmomentgrenzwert überschreitet.

7. System (1) zum Prüfen der Kalibrierung eines kalibrierbaren elektronischen Drehmomentwerkzeugs (2), insbesondere eines Drehmomentschraubenschlüssels oder eines Drehmomentschraubendrehers, , wobei das System (1) das Drehmomentwerkzeug (2) und eine Drehmomentprüfvorrichtung (4) umfasst, wobei das Drehmomentwerkzeug (2) einen Werkzeugkörper (20), einen Werkzeugkopf (21), eine Sende- und Empfangsvorrichtung (23) und einen Drehmomentsensor (22) umfasst, wobei die Drehmomentprüfvorrichtung (4) eine Werkzeugkopfaufnahme (41), eine Sende- und Empfangsvorrichtung (43), einen Drehmomentsensor (42) und eine Anzeigevorrichtung (45) umfasst, wobei die Werkzeugkopfaufnahme (41) zur Aufnahme des Werkzeugkopfs (21) ausgebildet ist, wobei die Sende- und Empfangsvorrichtung (23) des Drehmomentwerkzeugs (2) und die Sende- und Empfangsvorrichtung (43) der Drehmomentprüfvorrichtung (4) dazu eingerichtet sind, eine direkte Datenverbindung (6) zwischen dem Drehmomentwerkzeug (2) und der Drehmomentprüfvorrichtung (4) zu etablieren, wobei die Drehmomentprüfvorrichtung (4) dazu eingerichtet ist, mittels des Drehmomentsensors (42) der Drehmomentprüfvorrichtung (4) einen prüfvorrichtungsseitigen Drehmomentprüfwert (48) des Drehmomentwerkzeugs (2) zu bestimmen, wobei das Drehmomentwerkzeug (2) dazu eingerichtet ist, mittels des Drehmomentsensors (22) des Drehmomentwerkzeugs (2) einen werkzeugseitigen Drehmomentprüfwert (47) des Drehmomentwerkzeugs (2) zu bestimmen und den werkzeugseitigen Drehmomentprüfwert (47) über die Datenverbindung (6) an die Drehmomentprüfvorrichtung (4) zu übermitteln, wobei die Anzeigevorrichtung (45) dazu eingerichtet ist, den werkzeugseitigen Drehmomentprüfwert (47) und den prüfvorrichtungsseitigen Drehmomentprüfwert (48) gleichzeitig anzuzeigen.

8. System (1) nach Anspruch 7, **dadurch gekennzeichnet, dass** die Nutzung des Drehmomentwerkzeugs (2) durch eine Sperre verhindert wird, wobei die Drehmomentprüfvorrichtung (4) eine integrierte Datenverarbeitungsvorrichtung (44) umfasst, wobei die Datenverarbeitungsvorrichtung (44) dazu eingerichtet ist, den werkzeugseitigen Drehmomentprüfwert (47) und den prüfvorrichtungsseitigen Drehmomentprüfwert (48) zu empfangen, miteinander zu vergleichen und ein Freischaltsignal zu erzeugen, sofern eine Differenz zwischen dem werkzeugseitigen Drehmomentprüfwert (47) und dem prüfvorrichtungsseitigen Drehmomentprüfwert (48) innerhalb eines vorgegeben oder vorgebbaren Toleranzbereichs liegt, wobei die Datenverarbeitungsvorrichtung (44) ferner dazu eingerichtet ist, das Freischaltsignal über die Datenverbindung (6) an das Drehmomentwerkzeug (2) zu übermitteln, wobei das Drehmomentwerkzeug (2) dazu eingerichtet ist, sich mittels des Freischaltsignals durch Aufhebung der Sperre freizuschalten.

9. System (1) nach Anspruch 7 8, **dadurch gekennzeichnet, dass** das Drehmomentwerkzeug (2) einen Erschütterungssensor (29) umfasst, wobei das Drehmomentwerkzeug (2) dazu eingerichtet ist, die Sperre des Drehmomentwerkzeugs (2) zu aktivieren, sofern der Erschütterungssensor (29) eine Erschütterung registriert, die einen vorgebbaren oder vorgegebenen Erschütterungsgrenzwert überschreitet.

10. System (1) nach Anspruch 8 oder 9, **dadurch gekennzeichnet, dass** das Drehmomentwerkzeug (2) dazu eingerichtet ist, die Sperre des Drehmomentwerkzeugs (2) zu aktivieren, sofern der Drehmomentsensor (22) des Drehmomentwerkzeugs (2) einen Drehmomentwert registriert, der einen vorgebbaren oder vorgegebenen Drehmomentgrenzwert überschreitet.

11. Drehmomentprüfvorrichtung (4), umfassend eine Werkzeugkopfaufnahme (41), eine Sende- und Empfangsvorrichtung (43), einen Drehmomentsensor (42) und eine Anzeigevorrichtung (45), wobei die Drehmomentprüfvorrichtung (4) dazu eingerichtet und/oder ausgebildet ist, die folgenden Verfahrensschritte auszuführen:
- Etablieren einer direkten Datenverbindung (6) zwischen der Drehmomentprüfvorrichtung (4) und einem Drehmomentwerkzeug (2) mittels der Sende- und Empfangsvorrichtung (43) der Drehmomentprüfvorrichtung (4),
- Bestimmen eines prüfvorrichtungsseitigen Drehmomentprüfwerts (48) des Drehmomentwerkzeugs (2) mittels des Drehmomentsensors (42) der Drehmomentprüfvorrichtung (4), nachdem ein Werkzeugkopf (21) des Drehmomentwerkzeugs (2) mit der Werkzeugkopfaufnahme (41) der Drehmomentprüfvorrichtung (4) gekoppelt wurde,
- Empfangen eines werkzeugseitigen Drehmomentprüfwerts (47) mittels der Datenverbindung (6),
wobei die Drehmomentprüfvorrichtung (4) ferner dazu eingerichtet ist, auf der Anzeigevorrichtung (45) den werkzeugseitigen Drehmomentprüfwert (47) und den prüfvorrichtungsseitigen Drehmomentprüfwert (48) gleichzeitig anzuzeigen.

12. Drehmomentprüfvorrichtung (4) nach Anspruch 11 umfassend eine integrierte Datenverarbeitungsvorrichtung (44), wobei die Drehmomentprüfvorrichtung (4) dazu eingerichtet und/oder ausgebildet ist, die folgenden Verfahrensschritte auszuführen:
- Vergleichen des werkzeugseitigen Drehmomentprüfwerts (47) mit dem prüfvorrichtungsseitigen Drehmomentprüfwert (48) mittels der Datenverarbeitungsvorrichtung (44),
- Erzeugen eines Freischaltsignals, sofern eine Differenz zwischen dem werkzeugseitigen Drehmomentprüfwert (47) und dem prüfvorrichtungsseitigen Drehmomentprüfwert (48) innerhalb eines vorgegeben oder vorgebbaren Toleranzbereichs liegt,
- Übermitteln des Freischaltsignals über die Datenverbindung (6) an das Drehmomentwerkzeug (2).

13. Kalibrierbares elektronisches Drehmomentwerkzeug (2), umfassend einen Werkzeugkörper (20), einen Werkzeugkopf (21), eine Sende- und Empfangsvorrichtung (23) und einen Drehmomentsensor (22), wobei das Drehmomentwerkzeug (2) dazu eingerichtet und/oder ausgebildet ist, die folgenden Verfahrensschritte auszuführen:
- Etablieren einer direkten Datenverbindung (6) zwischen dem Drehmomentwerkzeug (2) und einer Drehmomentprüfvorrichtung (4) mittels der Sende- und Empfangsvorrichtung (23) des Drehmomentwerkzeugs (2),
- Bestimmen eines werkzeugseitigen Drehmomentprüfwerts (47) des Drehmomentwerkzeugs (2) mittels des Drehmomentsensors (22) des Drehmomentwerkzeugs (2),
- Übermitteln des werkzeugseitigen Drehmomentprüfwerts (47) an die Drehmomentprüfvorrichtung (4) mittels der Datenverbindung (6),
- Empfang eines Freischaltsignals von der Drehmomentprüfvorrichtung (4) über die Datenverbindung (6),
- Freischalten des Drehmomentwerkzeugs (2) mittels des Freischaltsignals durch Aufhebung einer Sperre.
